# EUROPEAN PATENT APPLICATION

(11) **EP 4 682 624 A1**
(43) Date of publication of application: **21.01.2026**
(21) Application number: 24212675.3
(22) Date of filing: 13.11.2024
(51) Int. Cl.: G02C 11/02, G02C 5/14

(54) **EYE WEAR DEVICE INCLUDING DECORATION**

(30) Priority: 17.07.2024 KR 20240094092
(71) Applicant: Ilcombined Co., Ltd., Seoul 04047 (KR)
(72) Inventor: AHN, NaYoung, 07282 Seoul (KR); KWON, KyoungHwan, 04047 Seoul (KR)
(74) Representative: Hoffmann Eitle

(57) **Abstract**

The technical idea of the present disclosure provides an eye wear device comprising at least one lens, a lens rim supporting the lens, a temple comprising an outer surface, an inner surface facing away from the outer surface, and at least one recess formed in the outer surface, the temple being coupled to the lens rim and at least one decorative piece comprising a frame having a through-hole and a decorative string wound around the frame through the through-hole, wherein the at least one decorative piece is inserted into the at least one recess.

## Description

### CROSS-REFERENCE TO RELATED APPLICATION

This application is based upon and claims the benefit of priority from Korean Patent Application No. 10-2024-0094092, filed on July 17, 2024, the entire contents of which are incorporated herein by reference.

### TECHNICAL FIELD

The present disclosure relates to an eye wear device. More specifically, the present disclosure relates to an eye wear device in which a decorative piece, with a decorative string made of fabric material and externally exposed, is coupled to an eyeglass rim made of metal or a synthetic resin like acetate.

### BACKGROUND

The eye wear device includes not only regular glasses but also all types of devices worn to protect the eyes in daily life, such as sunglasses and safety goggles. The eye wear device generally includes lenses, a lens rim that surrounds and supports the lenses, and temple arms that are coupled to both sides of the lens rim via hinges or other connecting components. Recently, eye wear devices have been worn not only for vision correction purposes but also increasingly for fashion and decorative purposes. When consumers purchase eye wear devices, not only the shape of the lens rim but also the originality and aesthetics of the shape and appearance of the temples are important selection criteria. For this reason, products that enhance originality and aesthetics by attaching decorative pieces to the temples are being developed in the production of eye wear devices.

In the past, such decorative pieces were either integrally formed during the production of the eyeglass rims or separately manufactured and then attached to the eyeglass rims using adhesives or the like. However, this required the decorative pieces to be made of the same material as the eyeglass rims or a material that could be well attached to the eyeglass rims using adhesives, which limited the materials that could be used for the decorative pieces. For this reason, decorative pieces made from materials completely different from those of the eyeglass rims (e.g., synthetic resins like acetate), such as fabric, could not be used. In addition, when decorative pieces were attached to the eyeglass rims using adhesives, there were also problems such as the attachment area of the decorative piece becoming dirty depending on the amount and type of adhesive used or the attachment area becoming exposed when the decorative piece fell off over time.

### SUMMARY

An embodiment of the present disclosure provides an eye wear device in which a decorative piece made of a material different from that of the eye wear device can be firmly coupled to the temples of the device.

An aspect of the present disclosure provides embodiments of an eye wear device. An eye wear device according to a representative embodiment comprises at least one lens, a lens rim supporting the lens, a temple comprising an outer surface, an inner surface facing away from the outer surface, and at least one recess formed in the outer surface, the temple being coupled to the lens rim and at least one decorative piece comprising a frame having a through-hole and a decorative string wound around the frame through the through-hole, wherein the at least one decorative piece is inserted into the at least one recess.

In exemplary embodiments the decorative string is made of a textile material.

In exemplary embodiments the decorative string is made of one of cotton, wool, silk, linen, denim, nylon, rayon, and polyester.

In exemplary embodiments the frame of the decorative piece comprises an upper wall, a lower wall formed on an opposite side of the upper wall and multiple side walls extending between the upper wall and the lower wall, wherein the multiple side walls comprise a first side wall and a second side wall opposite to the first side wall, and wherein the through-hole is formed through the first side wall and the second side wall.

In exemplary embodiments the through hole comprises a first through-hole and a second through hole, and the first through hole and the second through hole are formed parallel to each other.

In exemplary embodiments the decorative string comprises a first decorative string and a second decorative string, wherein the first decorative string is wound around the frame through only the first through hole, and wherein the second decorative string is wound around the frame through both the first through hole and the second through hole.

In exemplary embodiments the frame is made of an elastic material.

In exemplary embodiments the frame is made of at least one of polyvinyl chloride (PVC), rubber, silicone, spandex, and carbon fiber.

In exemplary embodiments the recess has a width corresponding to that of the first side wall of the decorative piece, and wherein the decorative piece is coupled to the recess by press-fitting.

In exemplary embodiments the decorative piece further comprises an insertion portion formed on a side opposite to the side where the decorative string is wound around the frame, and wherein the insertion portion comprises an insertion column extending on the opposite side and an insertion protrusion formed along an outer peripheral surface of the insertion column.

In exemplary embodiments the frame comprises an upper frame formed above the through hole, a lower frame formed below the through hole, and a frame ledge formed between an end of the upper frame and an end of the lower frame.

In exemplary embodiments the frame is made of a metal material.

In exemplary embodiments the surface of the temple is white or gray, and the surface of the frame is white or gray.

In exemplary embodiments the recess comprises a first recess space adjacent to the outer surface of the temple and a second recess space spaced apart from the outer surface of the temple, and wherein the first recess space has a width larger than that of the second recess space.

In exemplary embodiments the insertion protrusion of the decorative piece is coupled to the second recess space by press-fitting.

### BRIEF DESCRIPTION OF DRAWINGS

The accompanying drawings, which are incorporated in and constitute a part of the specification, illustrate embodiments of the present disclosure.
FIG. 1 is a perspective view of an eye wear device according to an embodiment.
FIG. 2 is a plan view of the eye wear device according to an embodiment.
FIG. 3 is a cross-sectional view of the eye wear device taken along line I-I' of FIG. 1, illustrating a portion of a temple including a recess according to an embodiment.
FIG. 4 is a cross-sectional view of the eye wear device taken along line I-I' of FIG. 1, illustrating a portion of a temple including a recess according to another embodiment.
FIG. 5 is a perspective view of a decorative piece with a decorative string wound therearound according to an embodiment.
FIG. 6 is a perspective view illustrating the frame of the decorative piece of FIG. 5.
FIG. 7 is a front view illustrating the frame of the decorative piece of FIG. 5.
FIG. 8 is a perspective view of a decorative piece with a decorative string wound therearound according to an embodiment different from the embodiment of FIG. 5.
FIG. 9 is a perspective view illustrating the frame of the decorative piece of FIG. 8.
FIG. 10 is a front view illustrating the frame of the decorative piece of FIG. 8.
FIG. 11 is a plan view of a state before the decorative piece of FIG. 5 is coupled to the recess.
FIG. 12 is a perspective view of a decorative piece with a decorative string wound therearound according to another embodiment different from the embodiments of FIG. 5 and FIG. 8.
FIG. 13 is a perspective view illustrating the frame of the decorative piece of FIG. 12.
FIG. 14 is a side view illustrating the frame of the decorative piece of FIG. 12.
FIG. 15 is a front view illustrating the frame of the decorative piece of FIG. 12.
FIG. 16 is a plan view of a state before the decorative piece of FIG. 12 is coupled to the recess.

### DETAILED DESCRIPTION

Embodiments of the present disclosure are exemplified for describing the technical spirit of the present disclosure. The scope of the present disclosure is not limited to the embodiments presented below or the detailed descriptions of such embodiments.

All technical terms and scientific terms used in the present disclosure have meanings that are commonly understood by a person ordinarily skilled in the art to which the present disclosure belongs unless otherwise defined. All of the terms used in the present disclosure are selected for the purpose of describing the present disclosure more clearly, and are not selected to limit the scope of rights according to the present disclosure.

As used in the present disclosure, expressions such as "including," "comprising," "having," and the like are to be understood as open-ended terms having the possibility of encompassing other embodiments, unless otherwise mentioned in the phrase or sentence including such expressions.

Singular expressions that are described in the present disclosure may encompass plural expressions unless otherwise stated, which also applies to the singular expressions recited in the claims.

As used in the present disclosure, expressions such as "first," "second," and the like are used to distinguish multiple elements from each other, and are not intended to limit an order or importance of the corresponding elements.

When a certain component is described as being "coupled to" or "connected to" another component, this is to be understood as having a meaning that the certain component may be coupled or connected directly to the other component or that the certain component may be coupled or connected to the other component via another new component.

Hereinafter, embodiments of the present disclosure will be described with reference to the accompanying drawings. In the accompanying drawings, the same or corresponding components are assigned the same reference numerals. In addition, in the description of the following embodiments, redundant descriptions of the same or corresponding components may be omitted. However, even if descriptions of components are omitted, it is not intended that such components are not included in any embodiment.

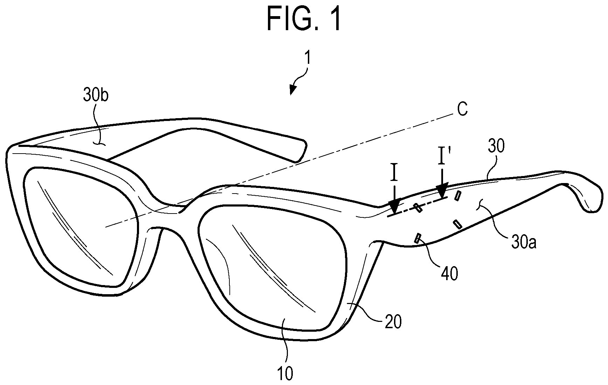

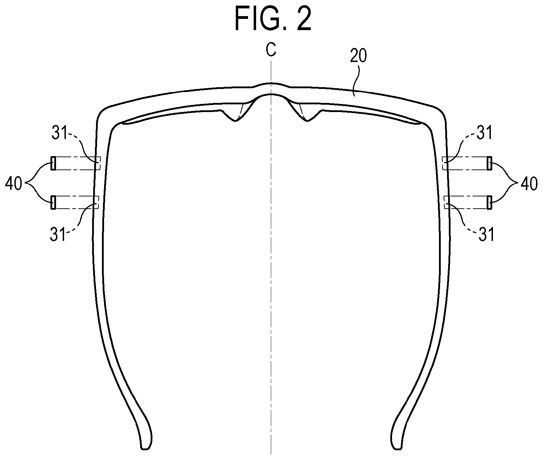

FIG. 1 is a perspective view of an eye wear device 1 according to an embodiment. FIG. 2 is a plan view of the eye wear device 1 according to an embodiment.

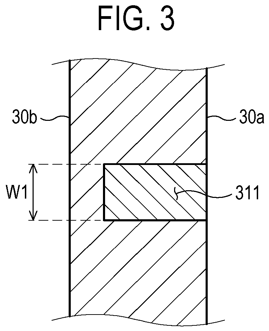

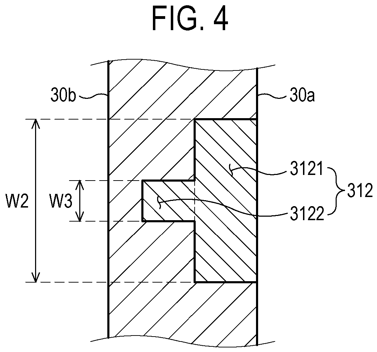

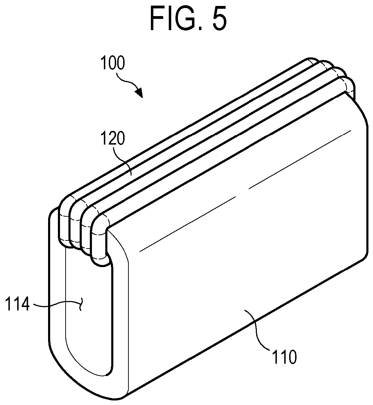

Referring to FIGS. 1 and 2, the eye wear device 1 may include a lens 10, a lens rim 20, a temple 30, and a decorative piece 40. In an embodiment, the lens 10 may be configured to completely or partially transmit light. Two lenses 10 may be arranged side by side. In an embodiment, the lens rim 20 may support the lenses 10. The lens rim 20 may be configured to at least partially surround the outer peripheries of the lenses 10. The lens rim 20 may also be configured to surround the entire outer surfaces of the lenses 10. In an embodiment, the temple 30 may be coupled to the lens rim 20. Temples 30 may be connected to both sides of the lens rim 20. The temples 30 may be hinge-coupled to the lens rim 20. The temples 30 may include outer surfaces 30a and inner surfaces 30b. The outer surfaces 30a of the temple 30 may face away from the center line C when the center line C is between two lenses 10. The inner surfaces 30b of the temples 30 may be oriented opposite to the outer surfaces 30a. That is, the inner surfaces 30b of the temples 30 may face the center line C. The outer surface 30a of each temple 30 may include a recess 31. One or more recesses 31 may be formed on the outer surface 30a of each temple 30. When two or more recesses 31 are formed, they may be geometrically symmetrical with respect to each other. The recesses 31 may each correspond to a space extending from the outer surface 30a to the inner surface 30b of the temple 30. The recesses 31 may be formed not to be exposed when viewed from the center line C. The recesses 31 may be formed not to penetrate the temples 30. The recesses 31 will be described in more detail below with reference to FIGS. 3 and 4. The decorative piece 40 may be inserted into a recess 31. The decorative piece 40 may be firmly coupled to the recess 31 to enhance the aesthetics of the eye wear device 1. The decorative piece 40 will be described in more detail below with reference to FIGS. 5 to 16.

Hereinafter, the shapes of recesses 311 and 312 according to various embodiments will be described in more detail with reference to FIGS. 3 and 4.

FIG. 3 is a cross-sectional view of the eye wear device 1 taken along line I-I' of FIG. 1, illustrating a portion of a temple 30 including a recess 311 according to an embodiment.

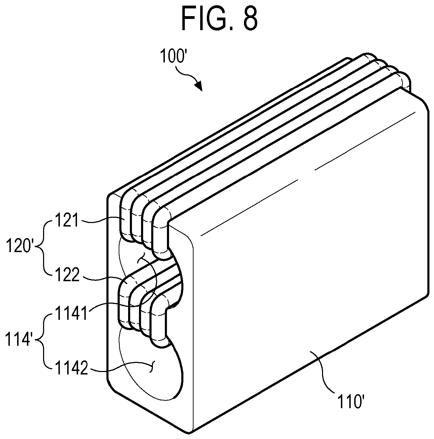

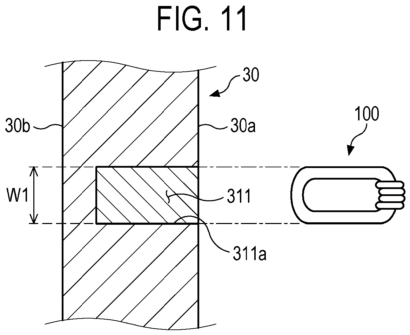

Referring to FIG. 3, the recess 311 according to an embodiment may extend from the outer surface 30a to the inner surface 30b and may have a constant width W1. Since the recess 311 has a constant width W1, the contact area between the recess 311 and a decorative piece (e.g., the decorative piece 100 or 100' in FIG. 5 or FIG. 8) inserted thereinto may be maximized. This will be described in more detail with reference to FIG. 11 below.

FIG. 4 is a cross-sectional view of the eye wear device 1 taken along line I-I' of FIG. 1, illustrating a portion of a temple 30 including a recess 312 according to another embodiment.

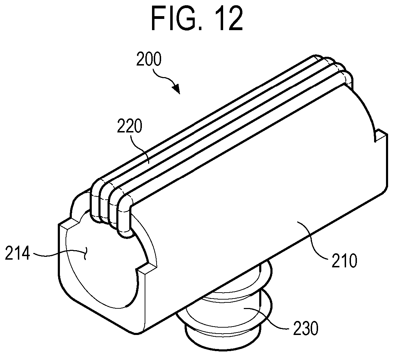

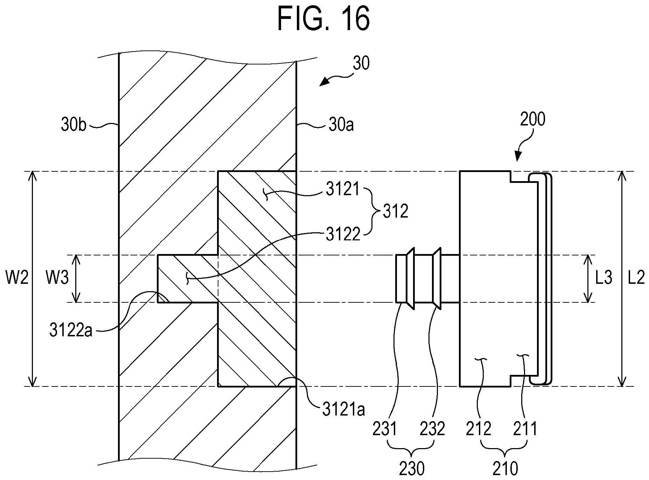

Referring to FIG. 4, the recess 312 may include a first recess space 3121 and a second recess space 3122. The first recess space 3121 may be formed adjacent to the outer surface 30a of the temple 30. The second recess space 3122 may be formed to be spaced apart from the outer surface 30a of the temple 30. The second recess space 3122 may be formed continuously with the first recess space 3121. The first recess space 3121 may have a constant width W2. The second recess space 3122 may have a constant width W3. The width W2 of the first recess space 3121 may be greater than the width W3 of the second recess space 3122. Since the recess 312 has the first recess space 3121 and the second recess space 3122, a decorative piece (e.g., the decorative piece 200 in FIG. 12) inserted into the recess 312 can be firmly coupled to the recess 312. This will be described in more detail with reference to FIG. 16 below.

Hereinafter, the structure and shape of a decorative piece (e.g., the decorative piece 40 in FIG. 1 or FIG. 2) inserted into a temple 30 will be described with reference to FIGS. 5 to 16. The decorative piece 40 may include, depending on its structure and shape, a decorative piece 100 according to the first embodiment, which will be described with reference to FIGS. 5 to 7 and FIG. 11, a decorative piece 100' according to a second embodiment, which will be described with reference to FIGS. 8 to 11, and a decorative piece 200 according to a third embodiment, which will be described with reference to FIGS. 12 to 16. When describing the decorative pieces 100' and 200 according to the second and third embodiments, any description that overlaps the description of the decorative piece 100 according to the first embodiment will be omitted.

The following is a description of the decorative 100 according to the first embodiment, which is explained with reference to FIGS. 5 to 7.

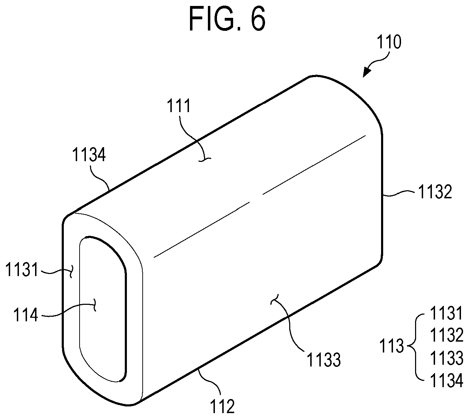

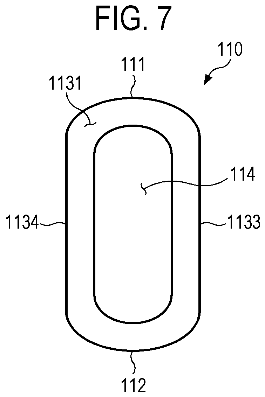

FIG. 5 is a perspective view of a decorative piece 100 in which a decorative string 120 according to an embodiment is wound. FIG. 6 is a perspective view illustrating a frame 110 of the decorative piece 100 of FIG. 5. FIG. 7 is a front view illustrating the frame 110 of the decorative piece 100 of FIG. 5.

Referring to FIGS. 5 to 7, the decorative piece 100 may include a frame 110 and a decorative string 120. The frame 110 may include a through hole 114 penetrating it. The decorative string 120 may be wound around the frame 110 through the through hole 114. The frame 110 may include an upper wall 111, a lower wall 112, and side walls 113. The lower wall 112 may be formed on the opposite side of the upper wall 111. The side walls 113 may extend between the upper wall 111 and the lower wall 112. The side walls 113 may include multiple side walls 1131, 1132, 1133, and 1134. The multiple side walls 1131, 1132, 1133, and 1134 may include a first side wall 1131, a second side wall 1132, a third side wall 1133, and a fourth side wall 1134. The multiple side walls 1131, 1132, 1133, and 1134 are not necessarily limited thereto and may include five or more side walls. The first side wall 1131 and the second side wall 1132 may face away from each other. The third side wall 1133 and the fourth side wall 1134 may face away from each other. The through hole 114 may be formed to penetrate the side walls facing away from each other. For example, referring to FIG. 6, the through hole 114 may be formed to penetrate the first side wall 1131 and the second side wall 1132. The decorative string 120 may be wound around the frame 110 to pass through the through hole 114 and be in contact with the upper wall 111. The decorative string 120 may be wound around the frame 110 only once. Preferably, referring to FIG. 5, the decorative string 120 may be wound around the frame 110 multiple times. The decorative string 120 may be made of a textile material. For example, the decorative string 120 can be made of a woven material such as cotton, wool, silk, linen, or denim. For example, the decorative string 120 may be made of a non-woven material such as nylon, rayon, or polyester.

The following is a description of the decorative piece 100' according to the second embodiment described with reference to FIGS. 8 to 10.

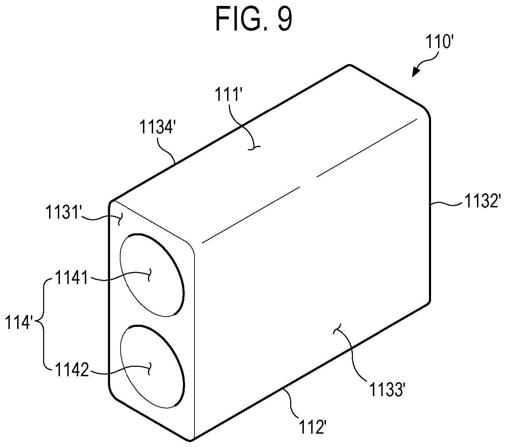

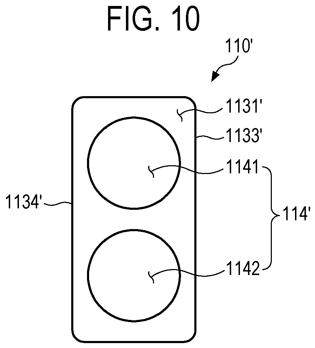

FIG. 8 is a perspective view of a decorative piece 100' having a decorative string 120' wound thereon according to an embodiment different from the embodiment of FIG. 5. FIG. 9 is a perspective view illustrating a frame 110' of the decorative piece 100' of FIG. 8. FIG. 10 is a front view illustrating the frame 110' of the decorative piece 100' of FIG. 8.

Referring to FIGS. 8 to 10, the decorative piece 100' may include multiple through holes 114'. In an embodiment, the through holes 114' may include a first through hole 1141 and a second through hole 1142. The first through hole 1141 and the second through hole 1142 may be parallel to each other. Referring to FIGS. 9 and 10, the first side wall 1131' and the second side wall 1132' may face away from each other, the third side wall 1133' and the fourth side wall 1134' may face away from each other, and the first through hole 1141 and the second through hole 1142 may penetrate the side walls facing away from each other. For example, referring to FIG. 9, the first through hole 1141 and the second through hole 1142 may penetrate the first side wall 1131' and the second side wall 1132'. The first side wall 1131' and the second side wall 1132' may be arranged vertically. Referring to FIG. 8, the decorative string 120' may include a first decorative string 121 and a second decorative string 122. The first decorative string 121 may be wound around the frame 110' through the first through hole 1141 to come into contact the upper wall 111'. The second decorative string 122 may be wound around the frame 110' through the first through hole 1141 and the second through hole 1142. The first decorative string 121 and the second decorative string 122 may be distinct decorative strings, which may each be wound around the frame 110'. The first decorative string 121 and the second decorative string 122 may a single connected string, which may be wound around the frame 110' in an '8' shape.

FIG. 11 is a plan view illustrating the state before the decorative piece 100 of FIG. 5 is coupled to the recess 311.

Referring to FIG. 11, the decorative piece 100 may have a width corresponding to the width W1 of the recess 311. That is, the decorative piece 100 may have a width that matches or is similar to the width W1 of the recess 311. Since the decorative piece 100 has a width W1 that matches or is similar to that of the recess 311, the decorative piece 100 may be coupled to the recess 311 by press-fitting. As the decorative piece 100 is coupled to the recess 311 by press-fitting, all air existing in the space between the decorative piece 100 and the recess 311 escapes to the outside, and when the decorative piece 100 is completely coupled to the recess 311, the space between the decorative piece 100 and the recess 311 may be considered to be substantially close to a vacuum state, which may enhance the adhesion between the decorative piece 100 and the recess 311.

In an embodiment, the temple 30 including the recess 311 may be made of at least one of acetate or celluloid materials. The temple 30 made of at least one of acetate or celluloid materials may be manufactured by a CNC process. As the temple 30 is manufactured by the CNC process, it contains moisture during the initial stages of manufacturing and has a relatively larger volume. As the moisture evaporates over time, the temple 30 shrinks. Therefore, when the decorative piece 100 is coupled to the recess 311 in a large-volume temple 30 during the initial stages of manufacturing process, the recess 311 shrinks over time, and the decorative piece 100 may be more firmly coupled to the recess 311. In this case, the frame 110 of the decorative piece 100 may be made of an elastic material. In the case where the frame 110 is made of an elastic material, when the material of the temple 30, such as acetate or celluloid, shrinks, the elasticity thereof may bring the decorative piece into closer contact with the inner wall 311a of the recess 311, and even when the temple 30 made of acetate or celluloid shrinks, the temple 30 may not be damaged. For example, the frame 110 may be made of at least one of polyvinyl chloride, rubber, silicone, spandex, and carbon fiber.

In an embodiment, although not illustrated, in order to enhance the adhesion between the frame 110 and the recess 311, the surface of the frame 110 and/or the inner wall 311a of the recess 311 may be made rough.

FIG. 11 illustrates a state before the decoration piece 100 of FIG. 5 is inserted into the recess 311, but the same may be applied when the decoration piece 100' of FIG. 8 is inserted into the recess 311. The decoration piece 100' of FIG. 8 is wound such that the second decoration string 122 protrudes outward from the frame 110'. Therefore, the frictional force between the inner wall of the recess 311 and the frame 110' increases when the decoration piece 100' is inserted into the recess 311, resulting in a more solid adhesion effect.

The following is a description of the decorative piece 200 according to the third embodiment described with reference to FIGS. 12 to 15.

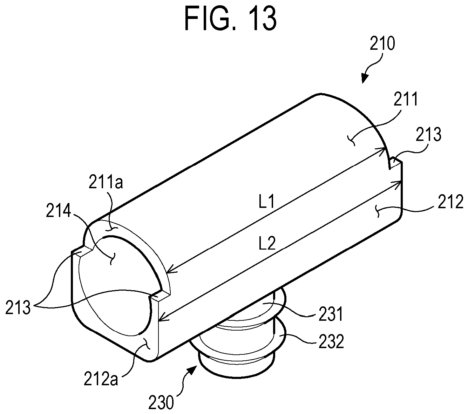

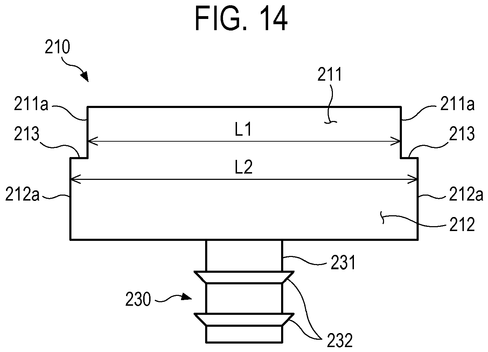

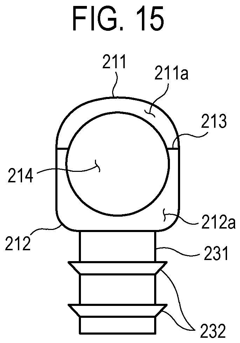

FIG. 12 is a perspective view of a decorative piece 200 having a decorative string 220 wound thereon according to another embodiment different from the embodiments of FIGS. 5 and 8. FIG. 13 is a perspective view illustrating a frame 210 of the decorative piece 200 of FIG. 12. FIG. 14 is a side view illustrating the frame 210 of the decorative piece 200 of FIG. 12. FIG. 15 is a front view illustrating the frame 210 of the decorative piece 200 of FIG. 12.

Referring to FIGS. 12 to 15, the decorative piece 200 may include a frame 210, a decorative string 220, and an insertion portion 230. The frame 210 may include an upper frame 211, a lower frame 212 formed on the opposite side of the upper frame 211, and a through hole 214 formed between the upper frame 211 and the lower frame 212. The decorative string 220 may be wound around the frame 210 through the through hole 214. The decorative string 220 may be wound around the upper frame 211. The insertion portion 230 may be formed on the opposite side of the side on which the decorative string 220 is wound. The insertion portion 230 may extend outward from the bottom surface of the lower frame 212. The insertion portion 230 may include one or more insertion columns 231 and one or more insertion protrusions 232. The insertion protrusions 232 may be formed along the outer surface of the insertion columns 231. The insertion portion 230 may be formed integrated with the frame 210.

Continuing with reference to FIGS. 13 and 14, the length L1 of the upper frame 211 may be shorter than the length L2 of the lower frame 212. Depending on the difference between the length L1 of the upper frame 211 and the length L2 of the lower frame 212, a frame ledge 213 may be formed between the end 211a of the upper frame 211 and the end 212a of the lower frame 212. The frame ledge 213 may prevent the decorative string 220, after being wound around the frame 210, from slipping down from the upper frame 211 to the lower frame 212 due to a loosened knot.

Referring to FIGS. 14 and 15, the insertion protrusion 232 may be formed to extend in a direction intersecting with the extension direction of the insertion column 231. Preferably, the insertion protrusion 232 may be formed obliquely toward the lower frame 212. By forming the insertion protrusion 232 obliquely toward the lower frame 212, the decorative piece (e.g., the decorative piece 200 in FIG. 12) may move relatively easily in the insertion direction when being inserted into a recess (e.g., the recess 312 in FIG. 16). However, once inserted into the recess 312, the decorative piece 200 becomes difficult to move in the discharge direction, resulting in a firm coupling.

FIG. 16 is a plan view illustrating the state before the decorative piece 200 of FIG. 12 is coupled to the recess 312.

Referring to FIG. 16, the decorative piece 200 may be coupled to the recess 312 by press-fitting. As described above with reference to FIG. 4, the recess 312 may include a first recess space 3121 and a second recess space 3122. The width W2 of the first recess space 3121 may be identical to or similar to the length L2 of the lower frame 212 of the frame 210 of the decorative piece 200. Accordingly, the end 212a of the lower frame 212 may be in close contact with the inner wall 3121a of the first recess space 3121. The width W3 of the second recess space 3122 may be identical to or similar to the width L3 of the insertion column 231 of the insertion portion 230 of the decorative piece 200. Accordingly, the outer peripheral surface of the insertion column 231 may be in close contact with the inner wall 3122a of the second recess space 3122. In an embodiment, the insertion portion 230 has an insertion protrusion 232 that protrudes beyond the width W3 of the second recess space 3122, and can achieve closer contact with the inner wall 3122a of the second recess space 3122. With the above structure, the decorative piece 200 can be firmly coupled to the recess 312. The second recess space 3122 may include a groove corresponding to the shape of the insertion protrusion 232. The above groove may be formed to surround the inner surface of the inner wall 3122a of the second recessed space 3122. As described above with reference to FIG. 11, when the temple 30 including the recess 312 is made of acetate or celluloid material, the recess 312 may shrink over time to further strengthen the coupling between the decorative piece 200 and the recess 312.

In an embodiment, the frame 210 and the insertion portion 230 of the decorative piece 200 may be made of a highly rigid material, such as a metal material. Since the frame 210 and the insertion portion 230 of the decorative piece 200 are made of a highly rigid material, the durability of the decorative piece 200 may increase, and when the insertion portion 230 is inserted into the second recess space 3122, the insertion protrusion 232 may be prevented from being damaged by the inner wall 3122a of the second recess space 3122.

In an embodiment, when the insertion portion 230 has one or more insertion columns 231, the recess 312 may include one or more second recess spaces 3122. The one or more second recess spaces 3122 may be formed corresponding to the spacing and shapes of the one or more insertion columns 231.

In an embodiment, the surface of the frame 210 may be of a light color, such as white or beige. Preferably, when at least the outer surface 30a of the surface of the temple 30 is of a light color, such as white, gray, or beige, the surface of the frame 210 may be of white or beige. When a metal frame 210 of a similar color is coupled to a light-colored temple 30, even if the decorative string 220 is wound on the frame 210, the phenomenon where the color of the decorative string 220 appears relatively darker due to light reflection can be prevented or reduced. In the previous description, white and beige were given as representative examples of the color of the frame 210, but any color that is brighter than either the frame 210 or the decorative string 220 wound around it may be applied.

In the foregoing, the technical idea of the present disclosure has been described with reference to some embodiments and examples illustrated in the accompanying drawings. However, it should be understood that various substitutions, modifications, and alterations may be made without departing from the technical idea and scope of the present disclosure, as understood by those ordinarily skilled in the technical field to which the present disclosure pertains. In addition, such substitutions, modifications, and alterations should be considered as falling within the scope of the appended claims.

According to the present disclosure, the eye wear device allows a decorative piece to be firmly and neatly coupled to its temples, regardless of the difference in materials between the eyeglass rim and the decorative piece.

While certain embodiments have been described, these embodiments have been presented by way of example only, and are not intended to limit the scope of the disclosures. Indeed, the embodiments described herein may be embodied in a variety of other forms. Furthermore, various omissions, substitutions and changes in the form of the embodiments described herein may be made without departing from the spirit of the disclosures. The accompanying claims and their equivalents are intended to cover such forms or modifications as would fall within the scope and spirit of the disclosures.

## Claims

1. An eye wear device comprising:
at least one lens;
a lens rim supporting the lens;
a temple comprising an outer surface, an inner surface facing away from the outer surface, and at least one recess formed in the outer surface, the temple being coupled to the lens rim; and
at least one decorative piece comprising a frame having a through-hole and a decorative string wound around the frame through the through-hole,
wherein the at least one decorative piece is inserted into the at least one recess.

2. The eye wear device of Claim 1, wherein the decorative string is made of a textile material.

3. The eye wear device of Claim 2, wherein the decorative string is made of one of cotton, wool, silk, linen, denim, nylon, rayon, and polyester.

4. The eye wear device of Claim 1, wherein the frame of the decorative piece comprises:
an upper wall;
a lower wall formed on an opposite side of the upper wall; and
multiple side walls extending between the upper wall and the lower wall,
wherein the multiple side walls comprise a first side wall and a second side wall opposite to the first side wall, and
wherein the through-hole is formed through the first side wall and the second side wall.

5. The eye wear device of Claim 4, wherein the through hole comprises a first through-hole and a second through hole, and
wherein the first through hole and the second through hole are formed parallel to each other.

6. The eye wear device of Claim 5, wherein the decorative string comprises a first decorative string and a second decorative string,
wherein the first decorative string is wound around the frame through only the first through hole, and
wherein the second decorative string is wound around the frame through both the first through hole and the second through hole.

7. The eye wear device of Claim 6, wherein the frame is made of an elastic material.

8. The eye wear device of Claim 7, wherein the frame is made of at least one of polyvinyl chloride (PVC), rubber, silicone, spandex, and carbon fiber.

9. The eye wear device of one of Claims 4 to 8, wherein the recess has a width corresponding to that of the first side wall of the decorative piece, and
wherein the decorative piece is coupled to the recess by press-fitting.

10. The eye wear device of Claim 1, wherein the decorative piece further comprises an insertion portion formed on a side opposite to the side where the decorative string is wound around the frame, and
wherein the insertion portion comprises an insertion column extending on the opposite side and an insertion protrusion formed along an outer peripheral surface of the insertion column.

11. The eye wear device of Claim 10, wherein the frame comprises an upper frame formed above the through hole, a lower frame formed below the through hole, and a frame ledge formed between an end of the upper frame and an end of the lower frame.

12. The eye wear device of Claim 10, wherein the frame is made of a metal material.

13. The eye wear device of Claim 12, wherein the surface of the temple is white or gray, and the surface of the frame is white or gray.

14. The eye wear device of one of Claims 10 to 13, wherein the recess comprises a first recess space adjacent to the outer surface of the temple and a second recess space spaced apart from the outer surface of the temple, and
wherein the first recess space has a width larger than that of the second recess space.

15. The eye wear device of Claim 14, wherein the insertion protrusion of the decorative piece is coupled to the second recess space by press-fitting.
